# EUROPEAN PATENT APPLICATION

(11) **EP 4 811 507 A1**
(43) Date of publication of application: **23.09.2026**
(21) Application number: 25213723.7
(22) Date of filing: 05.11.2025
(51) Int. Cl.: H01M 50/145, H01M 50/172, H01M 50/188, H01M 50/543, H01M 50/55, H01M 50/553, H01M 50/572

(54) **SECONDARY BATTERY AND METHOD FOR MANUFACTURING THE SAME**

(30) Priority: 21.03.2025 CN 202510344237
(71) Applicant: Zhejiang Jinko Energy Storage Co., Ltd., Jiaxing, Zhejiang (CN)
(72) Inventor: ZENG, Xianrong, Huangwan Town, Haining City, Jiaxing, Zhejiang (CN); YANG, Zixiang, Huangwan Town, Haining City, Jiaxing, Zhejiang (CN)
(74) Representative: Daub, Thomas

(57) **Abstract**

A secondary battery includes: a stacked lower plastic member (100) and substrate (101); positive and negative terminals (102, 103), the positive terminal including a bottom plate (112) and a main body portion (122) passing through the lower plastic member and the substrate; a positive upper plastic member (104) sleeved over the positive terminal and a negative upper plastic member (105) sleeved over the negative terminal, the positive and negative upper plastic members being made of a same insulating material; and a positive sealing ring (106) located between the positive terminal and the lower plastic member. A partial region of the lower plastic member abutting against the bottom plate is doped with a conductive material; or the secondary battery includes: a conductive structure embedded into an end portion of at least one of the lower plastic member, the positive upper plastic member, and the positive sealing ring.

## Description

### TECHNICAL FIELD

The present disclosure relates to the field of energy storage, and in particular, to a secondary battery and a method for manufacturing a secondary battery.

### BACKGROUND

Currently, in the field of energy storage, to ensure safety of a secondary battery during use, a hard case is generally employed to assemble a cell. Typically, the hard case accommodating the cell is made of a metallic material. To prevent a sharp increase in a loop current formed by the secondary battery and to prevent problems such as cell case corrosion and lithium plating, conduction between a substrate and a positive terminal of the secondary battery is required, so that the substrate is positively charged to solve the problem of case corrosion. However, if the conduction between the substrate and the positive terminal of the secondary battery is directly achieved by metals, since resistance of the metal is typically on an order of milliohms, when a short circuit occurs in the secondary battery, the loop current may increase sharply, which easily causes sparking and then leads to safety hazards such as a fire.

However, to solve the problem of case corrosion and the problem of an excessively large loop current in the secondary battery, generally, a positive upper plastic member is designed to have certain conductivity, which prevents simultaneous manufacturing of the positive upper plastic member and a negative upper plastic member, and may also shorten the service life and reduce safety of the positive upper plastic member, affecting mid-to-late-term safety of the secondary battery.

### SUMMARY

Embodiments of the present disclosure provide a secondary battery and a method for manufacturing the same.

According to some embodiments of the present disclosure, in one aspect, a secondary battery is provided. The secondary battery includes: a lower plastic member and a substrate that are stacked along a first direction; a positive terminal and a negative terminal spaced apart along a second direction; a positive upper plastic member sleeved over one end of the positive terminal, and a negative upper plastic member sleeved over one end of the negative terminal; and a positive sealing ring located between the positive terminal and the lower plastic member along the second direction. The positive terminal and the negative terminal sequentially pass through the lower plastic member and the substrate along the first direction respectively, the positive terminal includes a bottom plate abutting against a side of the lower plastic member away from the substrate, and a main body portion located on the bottom plate, and the main body portion passes through the lower plastic member and the substrate. The positive upper plastic member and the negative upper plastic member are made of a same insulating material, and along the second direction, the positive upper plastic member is further located between the positive terminal and the substrate. A partial region of the lower plastic member abutting against the bottom plate is doped with a conductive material, to achieve ohmic contact of the partial region of the lower plastic member with the substrate and the bottom plate; or the secondary battery further includes a conductive structure embedded into an end portion of at least one of the lower plastic member, the positive upper plastic member, and the positive sealing ring. Different regions of the conductive structure are in ohmic contact with the substrate and the positive terminal respectively.

In one or more embodiments, the lower plastic member has a first accommodating hole from which the positive terminal is led out, and the conductive structure is located on a side wall of the lower plastic member for defining the first accommodating hole and is further located on two opposite sides of the lower plastic member along the first direction.

In one or more embodiments, the positive upper plastic member has an extension portion located between the positive terminal and the substrate, and the conductive structure is located on a bottom surface of the extension portion facing the bottom plate and is further located on an outer wall and an inner wall of the extension portion that are opposite to each other along the second direction.

In one or more embodiments, the positive sealing ring has a first end portion facing the lower plastic member, and the conductive structure is located on a side wall of the first end portion facing the lower plastic member and is further located on two opposite sides of the first end portion along the first direction; or the positive sealing ring has a second end portion facing the positive upper plastic member, and the conductive structure is located on a top surface of the second end portion facing the positive upper plastic member and is further located on an outer side and an inner side of the second end portion that are opposite to each other along the second direction.

In one or more embodiments, a resistance range of the conductive structure is 100 Ω to 10000 Ω; and/or a material of the conductive structure includes a conductive polymer material or a conductive ceramic material.

In one or more embodiments, the conductive material includes at least one of carbon black, carbon nanotubes, graphene, metals, and metal oxides.

In one or more embodiments, the lower plastic member includes a first portion and a second portion spaced apart along the second direction, the first portion has a first accommodating hole from which the positive terminal is led out, the second portion has a first receiving hole from which the negative terminal is led out, and the first portion is doped with the conductive material.

In one or more embodiments, a ratio of a volume of the conductive structure to a volume of the substrate is less than or equal to 3%.

In one or more embodiments, under a test voltage of 500 V, a resistance value of the positive upper plastic member and a resistance value of the negative upper plastic member are both greater than 9 MΩ.

According to some embodiments of the present disclosure, in another aspect, a method for manufacturing a secondary battery is further provided. The method includes: providing a lower plastic member, a substrate, a positive terminal, a negative terminal, and a positive sealing ring, where the lower plastic member has a first accommodating hole from which the positive terminal is led out and a first receiving hole from which the negative terminal is led out, and the substrate has a second accommodating hole from which the positive terminal is led out and a second receiving hole from which the negative terminal is led out; doping a partial region of the lower plastic member abutting against the positive terminal with a conductive material, to achieve ohmic contact of the partial region of the lower plastic member with the substrate and the positive terminal, or forming a conductive structure, and embedding the conductive structure into an end portion of at least one of the lower plastic member, a positive upper plastic member, and the positive sealing ring, where different regions of the conductive structure are in ohmic contact with the substrate and the positive terminal respectively; stacking the lower plastic member and the substrate along a first direction; placing the positive sealing ring in the first accommodating hole, and passing the positive terminal sequentially through the first accommodating hole and the second accommodating hole along the first direction, so that the positive sealing ring is located between the positive terminal and the lower plastic member along a second direction; passing the negative terminal sequentially through the first receiving hole and the second receiving hole along the first direction; and forming the positive upper plastic member and a negative upper plastic member by adopting a same insulating material, where the positive upper plastic member is sleeved over one end of the positive terminal, the negative upper plastic member is sleeved over one end of the negative terminal, and along the second direction, the positive upper plastic member is further located between the positive terminal and the substrate.

In one or more embodiments, the positive sealing ring has a first end portion facing the lower plastic member, and the positive sealing ring has a second end portion facing the positive upper plastic member, the embedding the conductive structure into an end portion of at least one of the lower plastic member and the positive sealing ring includes: providing the conductive structure; and mounting the conductive structure to a side wall of the lower plastic member for defining the first accommodating hole and to two opposite sides of the lower plastic member along the first direction; or mounting the conductive structure to a side wall of the first end portion facing the lower plastic member and to two opposite sides of the first end portion along the first direction; or mounting the conductive structure to a top surface of the second end portion facing the positive upper plastic member and to an outer side and an inner side of the second end portion that are opposite to each other along the second direction.

In one or more embodiments, the positive upper plastic member has an extension portion located between the positive terminal and the substrate, and subsequent to the passing the positive terminal sequentially through the first accommodating hole and the second accommodating hole along the first direction and prior to the forming the positive upper plastic member, a gap exists between the positive terminal and the substrate; the forming a conductive structure includes: forming the conductive structure covering the gap, where the conductive structure defines a groove; and the forming the positive upper plastic member includes: forming the positive upper plastic member completely filling the groove.

The technical solutions provided in embodiments of the present disclosure have at least the following advantages.

Material composition of the partial region of the lower plastic member abutting against the bottom plate in the substrate is changed to reduce resistance of the partial region of the lower plastic member abutting against the bottom plate, which helps to achieve ohmic contact between the substrate and the positive terminal without adding extra components to the secondary battery, i.e., without affecting structural changes in the cell, thereby helping to simplify a manufacturing process and reduce a manufacturing cost of the secondary battery as much as possible. Alternatively, the conductive structure is disposed inside the secondary battery, and the conductive structure is embedded into the end portion of at least one of the lower plastic member, the positive upper plastic member, and the positive sealing ring, which may not affect an appearance of the secondary battery. Moreover, in the two design concepts above, the positive upper plastic member and the negative upper plastic member are made of the same insulating material. On the one hand, this helps to ensure that the positive upper plastic member and the negative upper plastic member have good insulating properties, high temperature resistance, and a long service life, thereby helping to reduce a probability of deformation of the positive upper plastic member and the negative upper plastic member under a force or heat and helping to reduce a probability of failure of the cell due to breakdown of the secondary battery by a high voltage during mid-to-late-term use, improving safety and prolonging the service life of the secondary battery. On the other hand, the positive upper plastic member and the negative upper plastic member are made of the same insulating material, and the positive upper plastic member and the negative upper plastic member may be formed simultaneously, which helps to simplify the manufacturing process of the secondary battery and reduce factors that affect a yield of the secondary battery. In addition, whether ohmic contact between the substrate and the positive terminal is achieved via the lower plastic member, whose partial region abutting against the bottom plate is doped with a conductive material, or slight conduction between the substrate and the positive terminal is achieved via the conductive structure embedded into the end portion of at least one of the lower plastic member, the positive upper plastic member, and the positive sealing ring, both help to enable the substrate to also be slightly positively charged when the secondary battery is an operating state, thereby preventing a phenomenon of cell case corrosion or lithium plating, and also help to prevent a phenomenon of an excessively large loop current when a short circuit occurs in the secondary battery, to further reduce the probability of a fire in the secondary battery, thereby improving the safety of the secondary battery.

### BRIEF DESCRIPTION OF DRAWINGS

One or more embodiments are exemplarily described by using figures that are corresponding thereto in the accompanying drawings. The exemplary descriptions do not constitute limitations on the embodiments. Unless otherwise particularly stated, the figures in the accompanying drawings do not constitute a scale limitation. In order to more clearly illustrate the technical solutions in embodiments of the present disclosure or the related art, the accompanying drawings used in the description of the embodiments or the related art will be briefly introduced below. It is apparent that, the accompanying drawings in the following description are only some embodiments of the present disclosure, and other drawings can be obtained by those of ordinary skill in the art from the provided drawings without creative efforts.
FIG. 1 is a schematic diagram of a first partial cross-sectional structure of a secondary battery according to one or more embodiments of the present disclosure;
FIG. 2 is a schematic diagram of a second partial cross-sectional structure of a secondary battery according to one or more embodiments of the present disclosure;
FIG. 3 is a schematic diagram of a third partial cross-sectional structure of a secondary battery according to one or more embodiments of the present disclosure;
FIG. 4 is a schematic diagram of a fourth partial cross-sectional structure of a secondary battery according to one or more embodiments of the present disclosure;
FIG. 5 is a schematic diagram of a fifth partial cross-sectional structure of a secondary battery according to one or more embodiments of the present disclosure;
FIG. 6 is a schematic diagram of a sixth partial cross-sectional structure of a secondary battery according to one or more embodiments of the present disclosure;
FIG. 7 is a schematic diagram of a partial cross-sectional structure of a substrate and a lower plastic member in a secondary battery according to one or more embodiments of the present disclosure; and
FIG. 8 is a schematic diagram of a seventh partial cross-sectional structure of a secondary battery according to one or more embodiments of the present disclosure.

### DESCRIPTION OF EMBODIMENTS

As can be seen from the Background, the safety of the secondary battery requires further improvement.

Upon analysis, it is found that, to enable the positive upper plastic member to have certain conductivity, material composition constituting the positive upper plastic member is required to be changed. For example, a carbon nanotube is added to the insulating material to reduce resistance of the positive upper plastic member and reduce insulating properties of the positive upper plastic member.

In this way, firstly, changing the material composition constituting the positive upper plastic member may also lead to reduction in high-temperature performance of the positive upper plastic member, so that in certain safety experiments, such as short circuit or thermal runaway, the positive upper plastic member is more likely to be dissolved, deformed, and destroyed by a high temperature, thereby reducing the safety of the secondary battery. Secondly, changing the material composition constituting the positive upper plastic member easily leads to reduction in the insulating properties and storage performance of the positive upper plastic member, and in a current situation where a high voltage and a long life are required in the field of energy storage, the secondary battery is easily broken down by the high voltage during mid-to-late-term use, thereby resulting in failure of the cell. Thirdly, changing the material composition constituting the positive upper plastic member prevents simultaneous manufacturing of the positive upper plastic member and the negative upper plastic member, which increases complexity of assembly of the secondary battery, and for an injection-molded upper plastic member, when the positive upper plastic member and the negative upper plastic member are made of different materials, different processes are required to form the positive upper plastic member and the negative upper plastic member respectively, thereby increasing the manufacturing cost of the secondary battery and making the yield of the secondary battery affected by more factors.

Embodiments of the present disclosure provide a secondary battery and a method for manufacturing the same. In the secondary battery, material composition of the partial region of the lower plastic member abutting against the bottom plate is changed to reduce resistance of the partial region of the lower plastic member abutting against the bottom plate, which helps to achieve ohmic contact between the substrate and the positive terminal without adding extra components to the secondary battery, i.e., without affecting structural changes in the cell, thereby helping to simplify a manufacturing process and reduce a manufacturing cost of the secondary battery as much as possible. Alternatively, the conductive structure is disposed inside the secondary battery, and the conductive structure is embedded into the end portion of at least one of the lower plastic member, the positive upper plastic member, and the positive sealing ring, which may not affect an appearance of the secondary battery. Moreover, in the two design concepts above, the positive upper plastic member and the negative upper plastic member are made of the same insulating material. On the one hand, this helps to ensure that the positive upper plastic member and the negative upper plastic member have good insulating properties, high temperature resistance, and a long service life, thereby helping to reduce a probability of deformation of the positive upper plastic member and the negative upper plastic member under a force or heat and helping to reduce a probability of failure of the cell due to breakdown of the secondary battery by a high voltage during mid-to-late-term use, improving safety and prolonging the service life of the secondary battery. On the other hand, the positive upper plastic member and the negative upper plastic member are made of the same insulating material, and the positive upper plastic member and the negative upper plastic member may be formed simultaneously, which helps to simplify the manufacturing process of the secondary battery and reduce factors that affect a yield of the secondary battery. In addition, whether ohmic contact between the substrate and the positive terminal is achieved via the lower plastic member, whose partial region abutting against the bottom plate is doped with a conductive material, or slight conduction between the substrate and the positive terminal is achieved via the conductive structure embedded into the end portion of at least one of the lower plastic member, the positive upper plastic member, and the positive sealing ring, both help to enable the substrate to also be slightly positively charged when the secondary battery is an operating state, thereby preventing a phenomenon of cell case corrosion or lithium plating, and also help to prevent a phenomenon of an excessively large loop current when a short circuit occurs in the secondary battery, to further reduce the probability of a fire in the secondary battery, thereby improving the safety of the secondary battery.

It should be noted that ohmic contact exists only when the state of charge (SOC) of the secondary battery is greater than 0, and the secondary battery is conductive to the outside to form a closed loop; in other cases, there is only physical contact.

In the description of the embodiments of the present disclosure, the technical terms such as "first" and "second" are used only to distinguish different objects, and cannot be understood as indicating or implying relative importance or implicitly indicating a quantity, a specific order or a primary-secondary relationship of the indicated technical features. In the description of the embodiments of the present disclosure, "a plurality of" means two or more, unless otherwise defined explicitly and specifically.

"Embodiments" as referred to herein means that particular features, structures or characteristics described with reference to the embodiments may be included in at least one embodiment of the present disclosure. Phrases appearing at various positions of the specification neither refer to the same embodiment, nor separate or alternative embodiments that are mutually exclusive with other embodiments. It is explicitly and implicitly understood by those skilled in the art that the embodiments described herein may be combined with other embodiments.

In the description of the embodiments of the present disclosure, the term "and/or" herein is merely an association relationship describing associated objects, indicating that three relationships may exist. For example, A and/or B may indicate that there are three cases of A alone, A and B together, and B alone. In addition, the character "/" herein generally means that the associated objects are in an "or" relationship.

In the description of the embodiments of the present disclosure, the term "a plurality of" means more than two (including two). Similarly, "a plurality of groups" means more than two groups (including two), and "a plurality of pieces" means more than two pieces (including two).

In the description of the embodiments of the present disclosure, the orientation or position relationships indicated by the technical terms "center", "longitudinal", "transverse", "length", "width", "thickness", "upper", "lower", "front", "back", "left", "right", "vertical", "horizontal", "top", "bottom", "inner", "outer", "clockwise", "counterclockwise", "axial", "radial", "circumferential", and the like are based on the orientation or position relationships shown in the accompanying drawings and are intended to facilitate the description of the embodiments of the present disclosure and simplify the description only, rather than indicating or implying that the apparatus or element referred to must have a particular orientation or be constructed and operated in a particular orientation, and therefore are not to be interpreted as limiting the embodiments of the present disclosure.

In the description of the embodiments of the present disclosure, unless otherwise specified and defined explicitly, the technical terms "mount", "connect", "join", and "fix" should be understood in a broad sense, which may be, for example, a fixed connection, a detachable connection, or an integral connection; a mechanical connection or an electrical connection; or a direct connection, an indirect connection via an intermediate medium, an internal connection between two elements, or interaction between two elements. Those of ordinary skill in the art can understand specific meanings of the terms in the embodiments of the present disclosure according to specific situations.

In the drawings corresponding to the embodiments of the present disclosure, for better understanding and ease of description, a thickness and an area of a layer are exaggerated. When a component (such as a layer, film, region, or base) is described as being on/above another component or on a surface of another component, the component may be "directly" on/above the surface of the another component or there may be a third component between the two components. In contrast, when one component is described as being on/above a surface of another component or another component is formed on/above or provided on/above a surface of one component, there is no third component between the two components. In addition, when a component is described as being "substantially" formed on/above another component, it means that the component is neither formed on the entire surface (or a front surface) of the another component, nor formed on part of an edge of the entire surface.

In the description of the embodiments of the present disclosure, when a component "includes" another component, other components are not excluded unless otherwise stated. Moreover, the other components may further be included therein. In addition, when a component such as a layer, a film, a region, or a plate is referred to as being "on" another component, it may be "directly on" the another component (i.e., on a surface of the other component without other components therebetween), or another component may exist therebetween. In addition, when a component such as a layer, a film, a region, or a plate is "directly on" another component, or when a component such as a layer, a film, a region, or a plate is on a surface of another component, it means that no other components exist therebetween.

The terms used in the description of the embodiments herein are for describing particular embodiments only and not intended to be limiting. As used in the description of the embodiments described and in the appended claims, "component" is also intended to include the plural form unless the context clearly indicates otherwise. The component includes a component such as a layer, a film, a region, or a plate.

Various embodiments of the present disclosure will be described in detail below with reference to the accompanying drawings. However, those of ordinary skill in the art may understand that in the embodiments of the present disclosure, many technical details are provided to enable readers to better understand the embodiments of the present disclosure. However, even without these technical details and various changes and modifications based on the following embodiments, the technical solutions claimed in the embodiments of the present disclosure can still be implemented.

Embodiments of the present disclosure provide a secondary battery. The secondary battery provided in some embodiments of the present disclosure will be described in detail below with reference to the accompanying drawings.

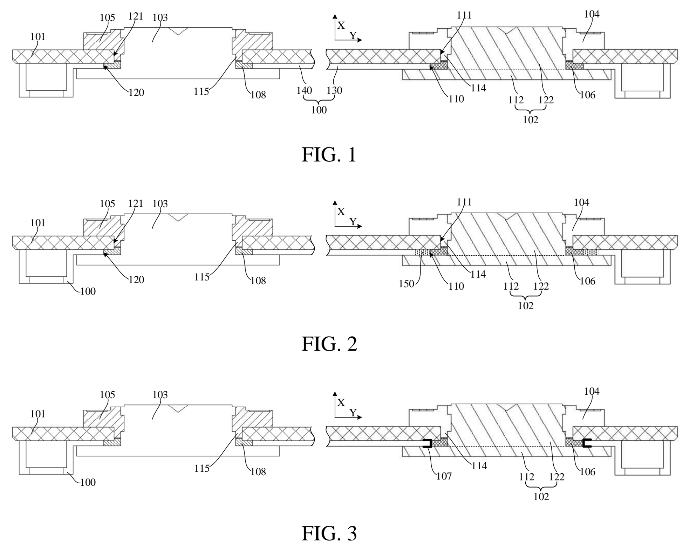

Referring to any one of FIG. 1 to FIG. 6, the secondary battery includes: a lower plastic member 100 and a substrate 101 that are stacked along a first direction X; a positive terminal 102 and a negative terminal 103 spaced apart along a second direction Y; a positive upper plastic member 104 sleeved over one end of the positive terminal 102, and a negative upper plastic member 105 sleeved one end of the negative terminal 103; and a positive sealing ring 106 located between the positive terminal 102 and the lower plastic member 100 along the second direction Y. The positive terminal 102 and the negative terminal 103 sequentially pass through the lower plastic member 100 and the substrate 101 along the first direction X respectively, the positive terminal 102 includes a bottom plate 112 abutting against a side of the lower plastic member 100 away from the substrate 101 and a main body portion 122 located on the bottom plate 112, and the main body portion 122 passes through the lower plastic member 100 and the substrate 101. The positive upper plastic member 104 and the negative upper plastic member 105 are made of a same insulating material, and along the second direction Y, the positive upper plastic member 104 is further located between the positive terminal 102 and the substrate 101.

Referring to FIG. 1 or FIG. 2, a partial region of the lower plastic member 100 abutting against the bottom plate 112 is doped with the conductive material, to achieve ohmic contact of the partial region of the lower plastic member 100 with the substrate 101 and the bottom plate 112.

Alternatively, referring to any one of FIG. 3 to FIG. 6, the secondary battery further includes: a conductive structure 107 embedded into an end portion of at least one of the lower plastic member 100, the positive upper plastic member 104, and the positive sealing ring 106. Different regions of the conductive structure 107 are in ohmic contact with the substrate 101 and the positive terminal 102 respectively.

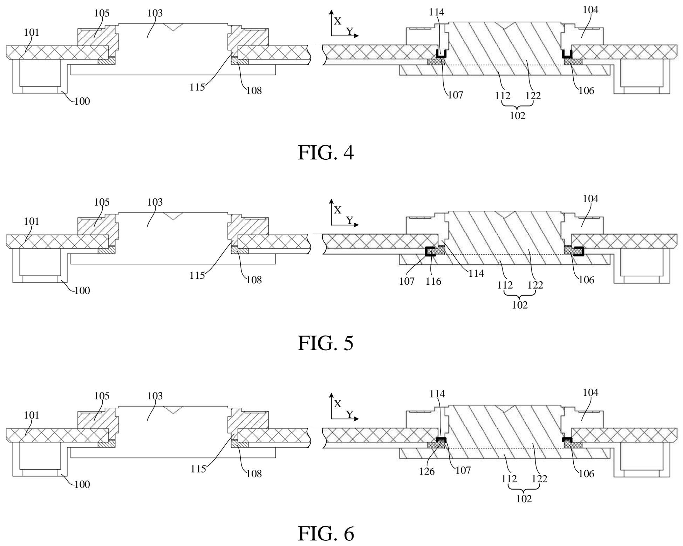

It is to be noted that FIG. 1 is a schematic diagram of a first partial cross-sectional structure of a secondary battery according to some embodiments of the present disclosure; FIG. 2 is a schematic diagram of a second partial cross-sectional structure of a secondary battery according to some embodiments of the present disclosure; FIG. 3 is a schematic diagram of a third partial cross-sectional structure of a secondary battery according to some embodiments of the present disclosure; FIG. 4 is a schematic diagram of a fourth partial cross-sectional structure of a secondary battery according to some embodiments of the present disclosure; FIG. 5 is a schematic diagram of a fifth partial cross-sectional structure of a secondary battery according to some embodiments of the present disclosure; and FIG. 6 is a schematic diagram of a sixth partial cross-sectional structure of a secondary battery according to some embodiments of the present disclosure.

In addition, firstly, in FIG. 1 to FIG. 6, a bottom plate 112 in the positive terminal 102 and a main body portion 122 for passing through the lower plastic member 100 and the substrate 101 are delineated with dashed lines, and a diameter of the bottom plate 112 is greater than that of the main body portion 122. Secondly, in order to clearly illustrate a combination relationship between the positive terminal 102 and other components in the secondary battery and a combination relationship between the negative terminal 103 and other components in the secondary battery, the lower plastic member 100 and the substrate 101 are cut off along the second direction Y by double-wavy lines in FIG. 1 to FIG. 6. Thirdly, compared with other components in the secondary battery, the conductive structure 107 is relatively small in size, and in FIG. 3 to FIG. 6, the conductive structure 107 is illustrated with thick black lines.

It is to be noted that, in order to achieve ohmic contact with the substrate 101 and the positive terminal 102, the secondary battery provided in some embodiments of the present disclosure includes at least the following two design concepts.

Firstly, referring to FIG. 1 or FIG. 2, material composition of the partial region of the lower plastic member 100 abutting against the bottom plate 112 is changed to reduce resistance of the partial region of the lower plastic member 100 abutting against the bottom plate 112, and other regions of the lower plastic member 100 still have excellent insulating properties, thereby helping to achieve ohmic contact between the substrate 101 and the positive terminal 102 by changing the partial region of the lower plastic member 100 abutting against the bottom plate 112 without adding extra components to the secondary battery, i.e., without affecting structural changes in the cell, thereby helping to simplify a manufacturing process and reduce a manufacturing cost of the secondary battery as much as possible.

Secondly, referring to any one of FIG. 3 to FIG. 6, the conductive structure 107 is disposed inside the secondary battery, and the conductive structure 107 is embedded into the end portion of at least one of the lower plastic member 100, the positive upper plastic member 104, and the positive sealing ring 106, which may not affect an appearance of the secondary battery.

Moreover, in the two design concepts above, the positive upper plastic member 104 and the negative upper plastic member 105 are made of the same insulating material. On the one hand, this helps to achieve ohmic contact between the substrate 101 and the positive terminal 102 and also ensure that the positive upper plastic member 104 and the negative upper plastic member 105 have good insulating properties, high temperature resistance, and a long service life, which avoids the material design of the positive upper plastic member 104 from having to make a trade-off a balance between possessing certain conductive properties, high-temperature resistance, and a long service life, thereby helping to reduce a probability of deformation of the positive upper plastic member 104 and the negative upper plastic member 105 under a force or heat and helping to reduce a probability of failure of the cell due to breakdown of the secondary battery by a high voltage during mid-to-late-term use, improving safety and prolonging the service life of the secondary battery.

On the other hand, the positive upper plastic member 104 and the negative upper plastic member 105 are made of the same insulating material, and the positive upper plastic member 104 and the negative upper plastic member 105 may be formed simultaneously, for example, the positive upper plastic member 104 and the negative upper plastic member 105 may be formed in a same injection molding process, which helps to simplify the manufacturing process of the secondary battery, thereby reducing the manufacturing cost of the secondary battery, and reducing factors that affect a yield of the secondary battery, thereby improving the yield of the secondary battery.

In addition, whether ohmic contact between the substrate 101 and the positive terminal 102 is achieved via the lower plastic member 100, whose partial region abutting against the bottom plate 112 is doped with the conductive material, or slight conduction between the substrate 101 and the positive terminal 102 is achieved via the conductive structure 107 embedded into the end portion of at least one of the lower plastic member 100, the positive upper plastic member 104, and the positive sealing ring 106, both help to enable the substrate 101 to also be slightly positively charged when the secondary battery is an operating state, thereby preventing a phenomenon of cell cases corrosion or lithium plating. Moreover, based on the slight conduction between the substrate 101 and the positive terminal 102, current transferred between the substrate 101 and the positive terminal 102 is extremely small, which also helps to prevent a phenomenon of an excessively large loop current when a short circuit occurs in the secondary battery, to further reduce the probability of a fire in the secondary battery, thereby improving the safety of the secondary battery.

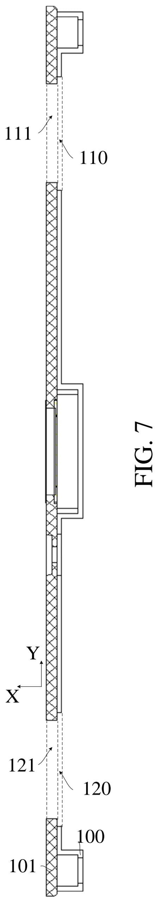

In some situations, referring to FIG. 7 and FIG. 1 to FIG. 6, where FIG. 7 is a schematic diagram of a partial cross-sectional structure of a substrate and a lower plastic member in the secondary battery according to some embodiments of the present disclosure, along the second direction Y, the positive upper plastic member 104 is further located between the positive terminal 102 and the substrate 101, and the negative upper plastic member 105 is also located between the negative terminal 103 and the substrate 101. It is to be noted that the substrate 101 has a second accommodating hole 111 from which the positive terminal 102 is led out and a second receiving hole 121 from which the negative terminal 103 is led out. To achieve that the positive terminal 102 passes through the substrate 101, and the positive terminal 102 and the substrate 101 are spaced apart, the positive upper plastic member 104 is further located between the positive terminal 102 and the substrate 101. In other words, the positive upper plastic member 104 has an extension portion 114 located between the positive terminal 102 and the substrate 101. In this way, by means of fillability and elasticity of the positive upper plastic member 104, it is conducive to enhancing a sealing effect of the positive upper plastic member 104 on the secondary battery and reducing a probability of stress concentration occurring in the positive terminal 102 and the substrate 101 due to a force, thereby helping to improve safety and prolong the service life of the secondary battery.

Similarly, to achieve that the negative terminal 103 passes through the substrate 101 and the negative terminal 103 and the substrate 101 are spaced apart, the negative upper plastic member 105 is also located between the negative terminal 103 and the substrate 101. In other words, the negative upper plastic member 105 has an extension portion 115 located between the negative terminal 103 and the substrate 101. In this way, by means of fillability and elasticity of the negative upper plastic member 105, it is conducive to enhancing a sealing effect of the negative upper plastic member 105 on the secondary battery and reducing a probability of stress concentration occurring in the negative terminal 103 and the substrate 101 due to a force, thereby helping to improve safety and prolong the service life of the secondary battery.

In some situations, still referring to FIG. 7 and FIG. 1 to FIG. 6, in addition to the positive sealing ring 106, the secondary battery further includes: a negative sealing ring 108 located between the negative terminal 103 and the lower plastic member 100 along the second direction Y. It is to be noted that the positive terminal 102 sequentially passes through the lower plastic member 100 and the substrate 101, and a gap exists between the positive terminal 102 and both the lower plastic member 100 and the substrate 101. The positive sealing ring 106 and the extension portion 114 of the positive upper plastic member 104 are both located in the gap, to seal the secondary battery. The positive sealing ring 106 may be located between the lower plastic member 100 and the positive terminal 102 along the second direction Y and may also be located between the substrate 101 and the positive terminal 102. The positive sealing ring 106 may be described in detail subsequently.

Similarly, the negative terminal 103 sequentially passes through the lower plastic member 100 and the substrate 101, and a gap exists between the negative terminal 103 and both the lower plastic member 100 and the substrate 101. The negative sealing ring 108 and the extension portion 115 of the negative upper plastic member 105 jointly fill the gap, to seal the secondary battery. The negative sealing ring 108 may be located between the lower plastic member 100 and the negative terminal 103 along the second direction Y and may also be located between the substrate 101 and the negative terminal 103. The negative sealing ring 108 may be described in detail subsequently.

In some situations, referring to FIG. 1 to FIG. 7, the substrate 101 may be a smooth aluminum sheet.

A position layout of the conductive structure 107 in the secondary battery is described in detail below using various embodiments respectively.

In some embodiments, referring to FIG. 7 and FIG. 3 together, the lower plastic member 100 has a first accommodating hole 110 from which the positive terminal 102 is led out, and the conductive structure 107 is located on a side wall of the lower plastic member 100 for defining the first accommodating hole 110 and is also located on two opposite sides of the lower plastic member 100 along the first direction X. In other words, the conductive structure 107 wraps an end portion of the lower plastic member 100 for defining the first accommodating hole 110, and the conductive structure 107 is disposed between the positive sealing ring 106 and the lower plastic member 100.

Still referring to FIG. 7 and FIG. 3 together, in a cross-sectional view taken along a diameter of the positive terminal 102, a cross-sectional shape of the conductive structure 107 is similar to a C-shape. The conductive structure 107 may include: a first connecting section located between the substrate 101 and the lower plastic member 100 along the first direction X, an extension section located between the lower plastic member 100 and the positive sealing ring 106 along the second direction Y, and a second connecting section located between the bottom plate 112 of the positive terminal 102 and the lower plastic member 100 along the first direction X. Two opposite ends of the extension section along the first direction X are respectively connected to the first connecting section and the second connecting section. In this way, the first connecting section achieves ohmic contact with the substrate 101, the second connecting section achieves ohmic contact with the bottom plate 112 of the positive terminal 102, and slight conduction between the substrate 101 and the positive terminal 102 is then achieved by means of the extension section that simultaneously connects the first connecting section and the second connecting section.

It is to be noted that, the lower plastic member 100 further has a first receiving hole 120 from which the negative terminal 103 is led out, and different from the fact that the conductive structure 107 wraps the end portion of the lower plastic member 100 for defining the first accommodating hole 110, an end portion of the lower plastic member 100 for defining the first receiving hole 120 is directly in contact with the negative sealing ring 108.

In some other embodiments, referring to FIG. 7 and FIG. 4 together, the positive upper plastic member 104 has an extension portion 114 located between the positive terminal 102 and the substrate 101, and the conductive structure 107 is located on a bottom surface of the extension portion 114 facing the bottom plate 112 and is also located on an outer wall and an inner wall of the extension portion 114 that are opposite to each other along the second direction Y. In other words, the conductive structure 107 wraps a bottom end of the extension portion 114 facing the bottom plate 112, and the conductive structure 107 is disposed between the positive sealing ring 106 and the positive upper plastic member 104.

Still referring to FIG. 7 and FIG. 4 together, in the cross-sectional view taken along the diameter of the positive terminal 102, the cross-sectional shape of the conductive structure 107 is similar to a U-shape. The conductive structure 107 may include: a first connecting section located between the substrate 101 and the extension portion 114 of the positive upper plastic member 104 along the second direction Y, an extension section located between the positive upper plastic member 104 and the positive sealing ring 106 along the first direction X, and a second connecting section located between the extension portion 114 of the positive upper plastic member 104 and the positive terminal 102 along the second direction Y. Two opposite ends of the extension section along the second direction Y are respectively connected to the first connecting section and the second connecting section. In this way, the first connecting section achieves ohmic contact with the substrate 101, the second connecting section achieves ohmic contact with the positive terminal 102, and slight conduction between the substrate 101 and the positive terminal 102 is then achieved by means of the extension section that simultaneously connects the first connecting section and the second connecting section.

It is to be noted that different from the fact that the conductive structure 107 wraps the bottom end of the extension portion 114 facing the bottom plate 112, that is, the conductive structure 107 is disposed between the positive sealing ring 106 and the positive upper plastic member 104, the negative terminal 103 sequentially passes through the lower plastic member 100 and the substrate 101, and the negative sealing ring 108 and the extension portion 115 of the negative upper plastic member 105 jointly fill the gap between the negative terminal 103 and both the lower plastic member 100 and the substrate 101.

In some other embodiments, referring to FIG. 7 and FIG. 5 together, the positive sealing ring 106 has a first end portion 116 facing the lower plastic member 100, and the conductive structure 107 is located on a side wall of the first end portion 116 facing the lower plastic member 100 and is also located on two opposite sides of the first end portion 116 along the first direction X. In other words, the conductive structure 107 wraps the first end portion 116.

Still referring to FIG. 7 and FIG. 5 together, in the cross-sectional view taken along the diameter of the positive terminal 102, the cross-sectional shape of the conductive structure 107 is similar to a C-shape. The conductive structure 107 may include: a first connecting section located between the substrate 101 and the first end portion 116 of the positive sealing ring 106 along the first direction X, an extension section located between the lower plastic member 100 and the positive sealing ring 106 along the second direction Y, and a second connecting section located between the bottom plate 112 of the positive terminal 102 and the first end portion 116 of the positive sealing ring 106 along the first direction X. Two opposite ends of the extension section along the first direction X are respectively connected to the first connecting section and the second connecting section. In this way, the first connecting section achieves ohmic contact with the substrate 101, the second connecting section achieves ohmic contact with the bottom plate 112 of the positive terminal 102, and slight conduction between the substrate 101 and the positive terminal 102 is then achieved by means of the extension section that simultaneously connects the first connecting section and the second connecting section.

It is to be noted that, the lower plastic member 100 further has a first receiving hole 120 from which the negative terminal 103 is led out, and different from the fact that the conductive structure 107 wraps the first end portion 116 of the positive sealing ring 106, that is, the conductive structure 107 is disposed between the positive sealing ring 106 and the lower plastic member 100, an end portion of the lower plastic member 100 for defining the first receiving hole 120 is directly in contact with the negative sealing ring 108.

In some other embodiments, referring to FIG. 7 and FIG. 6 together, the positive sealing ring 106 has a second end portion 126 facing the positive upper plastic member 104, and the conductive structure 107 is located on a top surface of the second end portion 126 facing the positive upper plastic member 104 and is also located on an outer side and an inner side of the second end portion 126 that are opposite to each other along the second direction Y. In other words, the conductive structure 107 wraps the second end portion 126, and along the second direction Y, the second end portion 126 is located between the substrate 101 and the positive terminal 102.

Still referring to FIG. 7 and FIG. 6 together, in the cross-sectional view taken along the diameter of the positive terminal 102, the cross-sectional shape of the conductive structure 107 is similar to a U-shape. The conductive structure 107 may include: a first connecting section located between the substrate 101 and the positive sealing ring 106 along the second direction Y, an extension section located between the positive upper plastic member 104 and the positive sealing ring 106 along the first direction X, and a second connecting section located between the positive sealing ring 106 and the positive terminal 102 along the second direction Y. Two opposite ends of the extension section along the second direction Y are respectively connected to the first connecting section and the second connecting section. In this way, the first connecting section achieves ohmic contact with the substrate 101, the second connecting section achieves ohmic contact with the positive terminal 102, and slight conduction between the substrate 101 and the positive terminal 102 is then achieved by means of the extension section that simultaneously connects the first connecting section and the second connecting section.

It is to be noted that the lower plastic member 100 further has a first receiving hole 120 from which the negative terminal 103 is led out. Different from the fact that the conductive structure 107 wraps the second end portion 126 of the positive sealing ring 106, that is, the conductive structure 107 is disposed between the positive sealing ring 106 and the positive upper plastic member 104, the negative terminal 103 sequentially passes through the lower plastic member 100 and the substrate 101, and the negative sealing ring 108 and the extension portion 115 of the negative upper plastic member 105 jointly fill the gap between the negative terminal 103 and both the lower plastic member 100 and the substrate 101.

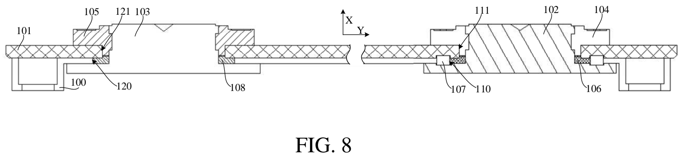

In some other embodiments, referring to FIG. 8, which is a schematic diagram of a seventh partial cross-sectional structure of a secondary battery according to some embodiments of the present disclosure. The conductive structure 107 is made of a conductive ceramic. The conductive ceramic is located between the lower plastic member 100 and the positive sealing ring 106 along the second direction Y. Moreover, two opposite ends of the conductive ceramic along the first direction X are in ohmic contact with the substrate 101 and the bottom plate 112 of the positive terminal 102 respectively, thereby achieving slight conduction between the substrate 101 and the positive terminal 102 by means of the conductive ceramic. In addition, compared to plastic, the ceramic material has higher stability. Consequently, through the arrangement of the conductive ceramic, it is conducive to improving pressure resistance and reliability of the secondary battery. In some situations, the pressure resistance of the secondary battery may be relatively increased by 500 V or more.

It is to be noted that the components in FIG. 8 that are the same as or corresponding to those in FIG. 1 to FIG. 6 are not described again herein.

It is to be noted that, referring to FIG. 8 and FIG. 7 together, the lower plastic member 100 further has a first receiving hole 120 from which the negative terminal 103 is led out, and different from the fact that the conductive ceramic is located between the lower plastic member 100 and the positive sealing ring 106 along the second direction Y, an end portion of the lower plastic member 100 for defining the first receiving hole 120 is directly in contact with the negative sealing ring 108.

In some examples, still referring to FIG. 8, the conductive ceramic may be regarded as being partially embedded into the substrate 101, and/or partially embedded into the bottom plate 112 of the positive terminal 102. In other words, along the first direction X, a thickness of the conductive ceramic is greater than that of the lower plastic member 100.

In some examples, still referring to FIG. 8, the conductive ceramic may be a ceramic ring or a ceramic pillar.

In the various embodiments above, referring to any one of FIG. 3 to FIG. 6 or FIG. 8, a resistance range of the conductive structure 107 may be 100 Ω to 10000 Ω. For example, the resistance value of the conductive structure 107 may be 200 Ω 500 Ω 700 Ω, 800 Ω 1000 Ω 1500 Ω 2000 Ω 2500 Ω 3000 Ω, 3500 Ω 4000 Ω, 4500 Ω, 5000 Ω 5500 Ω 6000 Ω, 6500 Ω 7000 Ω 7500 Ω, 8000 Ω, 8500 Ω 9000 Ω 9500 Ω, or the like.

It is to be noted that if the resistance value of the conductive structure 107 is less than 100 Ω the conductive structure 107 has excessively high resistivity, and resistance transferred between the substrate 101 and the positive terminal 102 is excessively low, which easily leads to a larger conduction current between the substrate 101 and the positive terminal 102, so that when a short circuit occurs in the secondary battery, a phenomenon easily occurs that the loop current is excessively large and causes a fire. If the resistance value of the conductive structure 107 is greater than 10000 Ω, the conductive structure 107 has excessively low resistivity, and the resistance transferred between the substrate 101 and the positive terminal 102 is excessively high, which leads to a small conduction current between the substrate 101 and the positive terminal 102, and even slight conduction between the substrate 101 and the positive terminal 102 cannot be achieved, so that when a short circuit occurs in the secondary battery, a risk of cell case corrosion or lithium plating is increased. In this way, by designing the resistance range of the conductive structure 107 to be within 100 Ω to 10000 Ω, the conductive structure 107 has an appropriate resistance value, which helps to prevent an excessively large loop current caused by the conductive structure 107 when a short circuit occurs in the secondary battery, thereby further reducing the probability of a fire in the secondary battery, so as to improve safety of the secondary battery, and also helps to ensure slight conduction between the substrate 101 and the positive terminal 102, to reduce the risk of cell case corrosion or lithium plating.

In the various embodiments above, referring to any one of FIG. 3 to FIG. 6 or FIG. 8, a material of the conductive structure 107 may include a conductive polymer material or a conductive ceramic material.

It is to be noted that the conductive polymer material is a polymeric material having conductive properties, which, in addition to conductivity, further has advantages such as ease of processing, low specific gravity, corrosion resistance, and tunable conductive properties. The conductive polymer material is a conductive composite material prepared through molecular design by synthesizing a conductive polymer with a conductive structure or adding a substance having conductive properties into a polymer matrix.

According to different structures and conduction principles, conductive polymer materials may be classified into structural conductive polymer materials and composite conductive polymer materials. Firstly, the structural conductive polymer material refers to a polymer material that has a conductive function in a polymer structure or after doping, for example, polyacetylene doped with a small amount of iodine or doped polysulfurnitride. The structural conductive polymer material may be used to manufacture lightweight plastic storage batteries, solar cells, sensor devices, microwave-absorbing materials, semiconductor components, and the like. Secondly, the composite conductive polymer material refers to a material formed by filling a polymer matrix with various conductive substances by using different processing techniques. A conductive filler provides conductive properties of the material, while the polymer matrix binds the conductive filler together and provides processing properties of the material. A material of the polymer matrix may include polyethylene, polypropylene (PP), polystyrene, epoxy resin, phenolic resin, or the like. The conductive filler may include carbon black, carbon nanotubes, graphene, metals, metal oxides, or the like.

In the various embodiments above, referring to any one of FIG. 3 to FIG. 6 or FIG. 8, a ratio of a volume of the conductive structure 107 to a volume of the substrate 101 may be less than or equal to 3%. For example, the ratio of the volume of the conductive structure 107 to the volume of the substrate 101 may be 2.9%, 2.8%, 2.7%, 2.6%, 2.5%, 2.4%, 2.3%, 2.2%, 2.1%, 2.0%, 1.9%, 1.8%, 1.7%, 1.6%, 1.5%, 1.4%, 1.3%, 1.2%, 1.1%, 1.0%, 0.9%, 0.8%, 0.6%, 0.5%, 0.4%, 0.3%, 0.2%, 0.1%, or the like.

It is to be noted that if the ratio of the volume of the conductive structure 107 to the volume of the substrate 101 is greater than 3%, the conductive structure 107 occupies a relatively large volume in the secondary battery, which easily affects sealing performance of assembly among the lower plastic member 100, the substrate 101, the positive terminal 102, the positive upper plastic member 104, and the positive sealing ring 106, thereby affecting a sealing effect of the secondary battery. In this way, the ratio of the volume of the conductive structure 107 to the volume of the substrate 101 is designed to be less than or equal to 3%, which helps to ensure slight conduction between the substrate 101 and the positive terminal 102 and also reduce the volume of the conductive structure 107 as much as possible, to enhance the sealing performance of the assembly among the lower plastic member 100, the substrate 101, the positive terminal 102, the positive upper plastic member 104, and the positive sealing ring 106.

Situations in which a partial region of the lower plastic member 100 abutting against the bottom plate 112 is doped with the conductive material is described in detail below using various embodiments respectively.

In some embodiments, referring to FIG. 1, the lower plastic member 100 includes a first portion 130 and a second portion 140 spaced apart along the second direction Y, the first portion 130 has a first accommodating hole 110 from which the positive terminal 102 is led out, the second portion 140 has a first receiving hole 120 from which the negative terminal 103 is led out, and the first portion 130 is doped with the conductive material. In other words, the lower plastic member 100 is a split-type lower plastic member, and includes at least a first portion 130 for accommodating the positive terminal 102 and a second portion 140 for accommodating the negative terminal 103. The first portion 130 and the second portion 140 are electrically insulated from each other.

Based on this, the design that the first portion 130 is doped with the conductive material can ensure that the partial region of the lower plastic member 100 abutting against the bottom plate 112 of the positive terminal 102 is doped with the conductive material, to achieve slight conduction between the substrate 101 and the positive terminal 102. Moreover, electrical insulation between the substrate 101 and the negative terminal 103 is ensured by means of the electrically insulated second portion 140.

In some other embodiments, referring to FIG. 2, the lower plastic member 100 has a first accommodating hole 110 from which the positive terminal 102 is led out, and further has a first receiving hole 120 from which the negative terminal 103 is led out, and the lower plastic member 100 has a contact portion 150 abutting against the bottom plate 112. A partial region of the contact portion 150 is doped with the conductive material. In other words, the lower plastic member 100 is an integral-type lower plastic member, that is, different regions of the same lower plastic member 100 are used to accommodate the positive terminal 102 and the negative terminal 103 respectively.

Based on this, only the part of the lower plastic member 100 abutting against the bottom plate 112 is required to be designed, that is, at least a partial region of the contact portion 150 is doped with the conductive material, to achieve slight conduction between the substrate 101 and the positive terminal 102.

It is to be noted that in order to respectively illustrate the contact portion 150 and other regions of the lower plastic member 100 except the contact portion 150, only the partial region of the lower plastic member 100 abutting against the bottom plate 112 is depicted with a filled pattern in FIG. 2. In addition, in the secondary battery provided in some embodiments of the present disclosure, dimensions of the contact portion 150 are not limited, as long as the slight conduction between the bottom plate 112 and the substrate 101 can be achieved through the contact portion 150.

In the various embodiments above, referring to FIG. 1 or FIG. 2, the doped conductive material may include at least one of carbon black, carbon nanotubes, graphene, metals, and metal oxides.

In some embodiments, referring to FIG. 1 to FIG. 8, under a test voltage of 500 V, a resistance value of the positive upper plastic member 104 and a resistance value of the negative upper plastic member 105 are both greater than 9 MΩ. In other words, compared with the partial region of the lower plastic member 100 doped with the conductive material and abutting against the bottom plate 112 or compared with the conductive structure 107, the positive upper plastic member 104 and the negative upper plastic member 105 both have excellent insulating properties.

In some embodiments, all materials and content used in both the positive upper plastic member 104 and the negative upper plastic member 105 may be exactly the same. In some examples, both the material of the positive upper plastic member 104 and the material of the negative upper plastic member 105 may both include one or more of polyphenylene sulfide (PPS), polyfluoroalkoxy (PFA), and PP.

In some examples, structures of the positive upper plastic member 104 and the negative upper plastic member 105 may also be the same. In other words, appearances, morphology, structures and dimensions of the positive upper plastic member 104 and the negative upper plastic member 105 may be exactly the same. In this way, the positive upper plastic member 104 and the negative upper plastic member 105 may be completely interchangeable. Markings used to distinguish polarity (positive/negative) of the positive terminal 102 and the negative terminal 103 may be set in other components of the secondary battery, for example, on a top cover of the secondary battery.

Based on the above, material composition of the partial region of the lower plastic member 100 abutting against the bottom plate 112 is changed to reduce resistance of the partial region of the lower plastic member 100 abutting against the bottom plate 112, which helps to achieve ohmic contact between the substrate 101 and the positive terminal 102 without adding extra components to the secondary battery, thereby helping to simplify a manufacturing process and reduce a manufacturing cost of the secondary battery as much as possible. Alternatively, the conductive structure 107 is disposed inside the secondary battery, and the conductive structure 107 is embedded into the end portion of at least one of the lower plastic member 100, the positive upper plastic member 104, and the positive sealing ring 106, which may not affect an appearance of the secondary battery. Moreover, in the two design concepts above, the positive upper plastic member 104 and the negative upper plastic member 105 are made of the same insulating material. On the one hand, this helps to ensure that the positive upper plastic member 104 and the negative upper plastic member 105 have good insulating properties, high temperature resistance, and a long service life, thereby helping to reduce a probability of deformation of the positive upper plastic member 104 and the negative upper plastic member 105 under a force or heat and helping to reduce a probability of failure of the cell due to breakdown of the secondary battery by a high voltage during mid-to-late-term use, improving safety and prolonging the service life of the secondary battery. The positive upper plastic member 104 and the negative upper plastic member 105 may be formed simultaneously, which helps to simplify the manufacturing process of the secondary battery and reduce factors that affect a yield of the secondary battery. In addition, whether ohmic contact between the substrate 101 and the positive terminal 102 is achieved via the lower plastic member 100, whose partial region abutting against the bottom plate 112 is doped with the conductive material, or slight conduction between the substrate 101 and the positive terminal 102 is achieved via the conductive structure 107 embedded into the end portion of at least one of the lower plastic member 100, the positive upper plastic member 104, and the positive sealing ring 106, both help to enable the substrate 101 to also be slightly positively charged when the secondary battery is an operating state, thereby preventing a phenomenon of cell case corrosion or lithium plating, and also helping to prevent a phenomenon of an excessively large loop current when a short circuit occurs in the secondary battery, to further reduce the probability of a fire in the secondary battery, thereby improving the safety of the secondary battery.

Embodiments of the present disclosure further provide a method for manufacturing a secondary battery, for manufacturing the secondary battery provided in the foregoing embodiments. The method for manufacturing a secondary battery provides in some embodiments of the present disclosure will be described in detail below with reference to the accompanying drawings. It is to be noted that the parts that are the same as or corresponding to the foregoing embodiments are not described again herein.

Referring to FIG. 1 to FIG. 7 together, the method for manufacturing a secondary battery includes at least the following steps.

In step S1, a lower plastic member 100, a substrate 101, a positive terminal 102, a negative terminal 103, and a positive sealing ring 106 are provided. The lower plastic member 100 has a first accommodating hole 110 from which the positive terminal 102 is led out and a first receiving hole 120 from which the negative terminal 103 is led out, and the substrate 101 has a second accommodating hole 111 from which the positive terminal 102 is led out and a second receiving hole 121 from which the negative terminal 103 is led out.

In step S2, referring to FIG. 1 or FIG. 2, a partial region of the lower plastic member 100 abutting against the positive terminal 102 is doped with a conductive material, to achieve ohmic contact of the partial region of the lower plastic member 100 with the substrate 101 and the positive terminal 102; or referring to any one of FIG. 3 to FIG. 6, a conductive structure 107 is formed, and the conductive structure 107 is embedded into an end portion of at least one of the lower plastic member 100, the positive upper plastic member 104, and the positive sealing ring 106. Different regions of the conductive structure 107 are in ohmic contact with the substrate 101 and the positive terminal 102 respectively.

In step S3, the lower plastic member 100 and the substrate 101 are stacked along a first direction X; the positive sealing ring 106 is placed in the first accommodating hole 110, and the positive terminal 102 sequentially passes through the first accommodating hole 110 and the second accommodating hole 111 along the first direction X, so that the positive sealing ring 106 is located between the positive terminal 102 and the lower plastic member 100 along a second direction Y; and the negative terminal 103 sequentially passes through the first receiving hole 120 and the second receiving hole 121 along the first direction X.

In step S4, a positive upper plastic member 104 and a negative upper plastic member 105 are formed by adopting a same insulating material. The positive upper plastic member 104 is sleeved over one end of the positive terminal 102, the negative upper plastic member 105 is sleeved over one end of the negative terminal 103, and along the second direction Y, the positive upper plastic member 104 is further located between the positive terminal 102 and the substrate 101.

It is to be noted that two different technical concepts are provided in step S2 to achieve slight conduction between the substrate 101 and the positive terminal 102. Step S2 will be described in detail later.

It is to be noted that, in step S4, the positive upper plastic member 104 and the negative upper plastic member 105 are made of the same insulating material, and the positive upper plastic member 104 and the negative upper plastic member 105 may be formed simultaneously, which helps to simplify the manufacturing process of the secondary battery, thereby reducing the manufacturing cost of the secondary battery, and reduce factors that affect a yield of the secondary battery, thereby improving the yield of the secondary battery.

In some examples, after the positive terminal 102 is positioned sequentially through the lower plastic member 100, the positive sealing ring 106, and the substrate 101, and the negative terminal 103 is positioned sequentially through the lower plastic member 100, the negative sealing ring 108, and the substrate 101, the positive upper plastic member 104 and the negative upper plastic member 105 can be simultaneously formed by integral injection molding, thereby achieving fixation and sealing of the positive terminal 102 and the negative terminal 103.

The step of forming the conductive structure 107 in step S2 is described in detail below.

In some embodiments, referring to FIG. 3 and FIG. 7 together, the lower plastic member 100 has a first accommodating hole 110 from which the positive terminal 102 is led out, and the embedding the conductive structure 107 into the end portion of the lower plastic member 100 may include: providing the conductive structure 107; and mounting the conductive structure 107 to a side wall of the lower plastic member 100 for defining the first accommodating hole 110 and to two opposite sides of the lower plastic member 100 along the first direction X.

It is to be noted that the step of providing the conductive structure 107 may include: manufacturing in advance the conductive structure 107 having a cross-sectional shape similar to a C-shape, the conductive structure 107 defining an accommodating groove; and the step of mounting the conductive structure 107 to the lower plastic member 100 may include: making the accommodating groove face an end portion of the lower plastic member 100 for defining the first accommodating hole 110, and making the conductive structure 107 sleeve over the lower plastic member 100, so that the accommodating groove accommodates the end portion of the lower plastic member 100 for defining the first accommodating hole 110. In this way, steps of assembly of the secondary battery may not be complicated, and based on the conductive structure 107, holes in the substrate 101 that correspond to the positive terminal 102 and the negative terminal 103 may be clearly distinguished.

In other embodiments, the conductive structure may alternatively be formed by coating on the side wall of the lower plastic member for defining the first accommodating hole and on two opposite sides of the lower plastic member along the first direction.

In some other embodiments, referring to FIG. 4 and FIG. 7 together, the positive upper plastic member 104 has an extension portion 114 located between the positive terminal 102 and the substrate 101, and subsequent to the passing the positive terminal 102 sequentially through the first accommodating hole 110 and the second accommodating hole 111 along the first direction X and prior to the forming the positive upper plastic member 104, a gap exists between the positive terminal 102 and the substrate 101; the step of forming a conductive structure 107 may include: forming the conductive structure 107 covering the gap, the conductive structure 107 defining a groove; and the step of forming the positive upper plastic member may include: forming the positive upper plastic member 104 completely filling the groove.

In some other embodiments, referring to FIG. 5 and FIG. 7 together, the positive sealing ring 106 has a first end portion 116 facing the lower plastic member 100, and the step of embedding the conductive structure 107 into an end portion of the positive sealing ring 106 may include: providing the conductive structure 107; and mounting the conductive structure 107 to a side wall of the first end portion 116 facing the lower plastic member 100 and to two opposite sides of the first end portion 116 along the first direction X.

It is to be noted that the step of providing the conductive structure 107 may include: manufacturing in advance the conductive structure 107 having a cross-sectional shape similar to a C-shape, the conductive structure 107 defining an accommodating groove; and the step of mounting the conductive structure 107 to the first end portion 116 may include: making the accommodating groove face the first end portion 116 of the positive sealing ring 106, and making the conductive structure 107 sleeve over the first end portion 116, so that the accommodating groove accommodates the first end portion 116. In this way, steps of assembly of the secondary battery may not be complicated, and based on the conductive structure 107, holes in the substrate 101 that correspond to the positive terminal 102 and the negative terminal 103 may also be clearly distinguished.

In other embodiments, the conductive structure may alternatively be formed by coating on the side wall of the first end portion facing the lower plastic member and on two opposite sides of the first end portion along the first direction.

In some other embodiments, referring to FIG. 6 and FIG. 7 together, the positive sealing ring 106 has a second end portion 126 facing the positive upper plastic member 104, and the step of embedding the conductive structure 107 into an end portion of the positive sealing ring 106 may include: providing the conductive structure 107; and mounting the conductive structure 107 to a top surface of the second end portion 126 facing the positive upper plastic member 104 and to an outer side and an inner side of the second end portion 126 opposite to each other along the second direction Y.

It is to be noted that the step of providing the conductive structure 107 may include: manufacturing in advance the conductive structure 107 having a cross-sectional shape similar to a U-shape, the conductive structure 107 defining an accommodating groove; and the step of mounting the conductive structure 107 to the second end portion 126 may include: making the accommodating groove face the second end portion 126 of the positive sealing ring 106, and making the conductive structure 107 sleeve over the second end portion 126, so that the accommodating groove accommodates the second end portion 126. In this way, steps of assembly of the secondary battery may not be complicated, and based on the conductive structure 107, holes in the substrate 101 that correspond to the positive terminal 102 and the negative terminal 103 may also be clearly distinguished.

In other embodiments, the conductive structure may alternatively be formed by coating on the top surface of the second end portion facing the positive upper plastic member and on the outer side and the inner side of the second end portion opposite to each other along the second direction.

Those of ordinary skill in the art may understand that the above implementations are specific embodiments of the present disclosure, and in practical applications, various changes can be made in form and details without departing from the spirit and scope of the embodiments of the present disclosure. Any person skilled in the art may make various changes and modifications without departing from the spirit and scope of the embodiments of the present disclosure. Therefore, the protection scope of the embodiments of the present disclosure shall be subject to the scope defined by the claims.

## Claims

1. A secondary battery, comprising:
a lower plastic member and a substrate stacked along a first direction;
a positive terminal and a negative terminal spaced apart along a second direction, wherein the positive terminal and the negative terminal sequentially pass through the lower plastic member and the substrate along the first direction respectively, and the positive terminal comprises a bottom plate abutting against a side of the lower plastic member away from the substrate, and a main body portion located on the bottom plate, wherein the main body portion passes through the lower plastic member and the substrate;
a positive upper plastic member sleeved over one end of the positive terminal, and a negative upper plastic member sleeved over one end of the negative terminal, wherein the positive upper plastic member and the negative upper plastic member are made of a same insulating material, and along the second direction, the positive upper plastic member is further located between the positive terminal and the substrate; and
a positive sealing ring located between the positive terminal and the lower plastic member along the second direction,
wherein a partial region of the lower plastic member abutting against the bottom plate is doped with a conductive material, to achieve ohmic contact of the partial region of the lower plastic member with the substrate and the bottom plate; or
wherein the secondary battery further comprises:
a conductive structure embedded into an end portion of at least one of the lower plastic member, the positive upper plastic member, and the positive sealing ring, wherein different regions of the conductive structure are in ohmic contact with the substrate and the positive terminal respectively.

2. The secondary battery according to claim 1, wherein the lower plastic member has a first accommodating hole from which the positive terminal is led out, and the conductive structure is located on a side wall of the lower plastic member for defining the first accommodating hole and is further located on two opposite sides of the lower plastic member along the first direction.

3. The secondary battery according to claim 1, wherein the positive upper plastic member has an extension portion located between the positive terminal and the substrate, and the conductive structure is located on a bottom surface of the extension portion facing the bottom plate and is further located on an outer wall and an inner wall of the extension portion that are opposite to each other along the second direction.

4. The secondary battery according to claim 1, wherein the positive sealing ring has a first end portion facing the lower plastic member, and the conductive structure is located on a side wall of the first end portion facing the lower plastic member and is further located on two opposite sides of the first end portion along the first direction; or
the positive sealing ring has a second end portion facing the positive upper plastic member, and the conductive structure is located on a top surface of the second end portion facing the positive upper plastic member and is further located on an outer side and an inner side of the second end portion that are opposite to each other along the second direction.

5. The secondary battery according to claim 1, wherein the conductive structure is made of a conductive ceramic located between the lower plastic member and the positive sealing ring along the second direction, and two opposite ends of the conductive ceramic along the first direction are in ohmic contact with the substrate and the bottom plate of the positive terminal respectively.

6. The secondary battery according to claim 5, wherein the conductive ceramic is partially embedded into the substrate, and/or is partially embedded into the bottom plate of the positive terminal.

7. The secondary battery according to claim 6, wherein the conductive ceramic is a ceramic ring or a ceramic pillar.

8. The secondary battery according to any one of claims 2 to 6, wherein a resistance range of the conductive structure is 100 Ω to 10000 Ω; and/or a material of the conductive structure comprises a conductive polymer material or a conductive ceramic material.

9. The secondary battery according to claim 1, wherein the conductive material comprises at least one of carbon black, carbon nanotubes, graphene, metals, and metal oxides.

10. The secondary battery according to claim 1 or 9, wherein the lower plastic member comprises a first portion and a second portion spaced apart along the second direction, the first portion has a first accommodating hole from which the positive terminal is led out, the second portion has a first receiving hole from which the negative terminal is led out, and the first portion is doped with the conductive material.

11. The secondary battery according to any one of claims 2 to 6, wherein a ratio of a volume of the conductive structure to a volume of the substrate is less than or equal to 3%.

12. The secondary battery according to any one of claims 1 to 11, wherein under a test voltage of 500 V, a resistance value of the positive upper plastic member and a resistance value of the negative upper plastic member are both greater than 9 MΩ.

13. A method for manufacturing a secondary battery, comprising:
providing a lower plastic member, a substrate, a positive terminal, a negative terminal, and a positive sealing ring, wherein the lower plastic member has a first accommodating hole from which the positive terminal is led out and a first receiving hole from which the negative terminal is led out, and the substrate has a second accommodating hole from which the positive terminal is led out and a second receiving hole from which the negative terminal is led out;
doping a partial region of the lower plastic member abutting against the positive terminal with a conductive material, to achieve ohmic contact of the partial region of the lower plastic member with the substrate and the positive terminal; or forming a conductive structure, and embedding the conductive structure into an end portion of at least one of the lower plastic member, a positive upper plastic member, and the positive sealing ring, wherein different regions of the conductive structure are in ohmic contact with the substrate and the positive terminal respectively;
stacking the lower plastic member and the substrate along a first direction;
placing the positive sealing ring in the first accommodating hole, and passing the positive terminal sequentially through the first accommodating hole and the second accommodating hole along the first direction, so that the positive sealing ring is located between the positive terminal and the lower plastic member along a second direction;
passing the negative terminal sequentially through the first receiving hole and the second receiving hole along the first direction; and
forming the positive upper plastic member and a negative upper plastic member by adopting a same insulating material, wherein the positive upper plastic member is sleeved over one end of the positive terminal, the negative upper plastic member sleeved over one end of the negative terminal, and along the second direction, the positive upper plastic member is further located between the positive terminal and the substrate.

14. The method for manufacturing a secondary battery according to claim 13, wherein the positive sealing ring has a first end portion facing the lower plastic member, and the positive sealing ring has a second end portion facing the positive upper plastic member; and
the embedding the conductive structure into an end portion of at least one of the lower plastic member and the positive sealing ring comprises:
providing the conductive structure; and
mounting the conductive structure to a side wall of the lower plastic member for defining the first accommodating hole and to two opposite sides of the lower plastic member along the first direction; or mounting the conductive structure to a side wall of the first end portion facing the lower plastic member and to two opposite sides of the first end portion along the first direction; or mounting the conductive structure to a top surface of the second end portion facing the positive upper plastic member and to an outer side and an inner side of the second end portion that are opposite to each other along the second direction.

15. The manufacturing method for a secondary battery according to claim 13, wherein the positive upper plastic member has an extension portion located between the positive terminal and the substrate, and subsequent to the passing the positive terminal sequentially through the first accommodating hole and the second accommodating hole along the first direction and prior to the forming the positive upper plastic member, a gap exists between the positive terminal and the substrate;
the forming a conductive structure comprises: forming the conductive structure covering the gap, wherein the conductive structure defines a groove; and
the forming the positive upper plastic member comprises: forming the positive upper plastic member completely filling the groove.
